# EUROPÄISCHE PATENTANMELDUNG

(11) **EP 3 351 465 A1**
(43) Veröffentlichungstag der Anmeldung: **25.07.2018**
(21) Anmeldenummer: 18000028.3
(22) Anmeldetag: 16.01.2018
(51) Int. Cl.: B62J 7/06, B62J 9/00, B62J 7/08

(54) **FAHRRADGEPÄCKTRÄGER**

(30) Priorität: 20.01.2017 DE 102017101048
(71) Anmelder: Lieblein, Günther, 97456 Dittelbrunn (DE)
(72) Erfinder: Lieblein, Günther, 97456 Dittelbrunn (DE)
(74) Vertreter: Petri, Lars

(57) **Zusammenfassung**

Fahrradgepäckträger (100) für einen Vorderbau, welcher Fahrradgepäckträger (100) eine Befestigungsvorrichtung (500) mit mindestens einem Klemmelement (104, 404) und ein mittels dem Klemmelement (104, 404) arretierbares Stellelement (101) umfasst, wobei das Stellelement (101) derart schalenförmig ausgebildet ist, dass es im arretierten Zustand gegen einen Lenkervorbau (501) des Fahrrads, an dem der Fahrradgepäckträger (100) montiert ist, abstützbar ist.

## Beschreibung

Die Erfindung betrifft einen Fahrradgepäckträger für einen Vorderbau gemäß dem unabhängigen Anspruch.

Ein Fahrradgepäckträger ist eine an einem Fahrrad montierbare Vorrichtung zum Transport von Lasten auf Fahrrädern. Der Transport von Lasten meint dabei sowohl den Transport von Gegenständen (Kisten, Körbe, etc.), kann aber ebenso der Transport von Kindern sein.

Im Stand der Technik werden Fahrradgepäckträger auch anhand Ihrer Montageposition unterschieden, so sind neben dem typischen Gepäcksträger am Hitnerrad auch sogenannte Lowrider bekannt. Dabei handelt es sich um eine Haltevorrichtung für Gepäck(taschen) an Fahrrädern, die üblicherweise an der Gabel befestigt und tiefer gelegen ist als der übliche Fahrradgepäckträger über dem Hinterrad. Zur sicheren Anbringung eines Lowriders an der Vorderradgabel sind spezielle Ösen mit Gewinde an den Gabelholmen erforderlich.

Es sind bereits Fahrradgepäckträger für Fahrräder bekannt, die am Lenkervorbau befestigt werden. Konventionelle Gepäckträger für den Lenkervorbau umfassen neben einer Lastenaufnahme eine Befestigungsvorrichtung mit üblicherweise mehreren Klemmelementen, die an der Lenkerstange befestigt werden. Lastenaufnahmen umfassen im einfachsten Fall Aufnahmen für Kindersitze oder spezielle Taschen- oder Koffersysteme. Jedes Klemmelement wird um die Lenkerstange gelegt und durch eine Klemmschraube fixiert. Diese um die Lenkerstange gelegten Klemmelemente halten aufgrund der Reibung zwischen den Innenflächen der Klemmelemente und der Oberfläche der Lenkerstange, wobei die Stärke der entstehenden Reibungskräfte durch die Verspannung mittels Klemmschrauben vorgegeben ist. Problematisch ist dabei, dass diese Gepäckträger aus der eingestellten Position verrutschen, wenn beim Transport von schweren Gegenständen entsprechende Kräfte auftreten.

Aufgabe der vorliegenden Erfindung ist es daher einen Gepäckträger bereitzustellen, der die Nachteile aus dem Stand der Technik überwindet und der insbesondere ein Verrutschen aus einer eingestellten Position aufgrund von beim Transport von schweren Gegenständen auftretenden, entsprechenden Kräften verhindert oder zumindest reduziert.

Diese Aufgabe wird durch einen Gepäckträger nach Anspruch 1 gelöst. Der Gegenstand der Unteransprüche betrifft jeweils vorteilhafte Aspekte der Erfindung.

Die Erfindung umfasst einen Fahrradgepäckträger für einen Fahrradlenker. Der Fahrradgepäckträger umfasst eine Befestigungsvorrichtung mit mindestens einem Klemmelement und ein mittels dem Klemmelement arretierbares Stellelement. Das Stellelement ist derart schalenförmig ausgebildet, dass es im arretierten Zustand gegen einen Lenkervorbau des Fahrrads, an dem der Fahrradgepäckträger montiert ist, abstützbar ist. Indem das Stellelement mit einer Kante an der Unterseite des Vorbaus (bzw. am Fahrradlenker) im eingebauten Zustand abgestützt ist, wird ein Verrutschen aus einer eingestellten Position aufgrund von beim Transport von schweren Gegenständen auftretenden, entsprechenden Kräften verhindert oder zumindest reduziert.

Gemäß einem vorteilhaften Aspekt umfasst das Stellelement mindestens ein erstes gezahntes Profil. Das mindestens eine Klemmelement umfasst mindestens ein zweites gezahntes Profil. So werden durch Aneinanderdrücken der Klemmelemente an das schalenförmige Stellelement diese arretiert. Das Aneinanderdrücken kann zum Beispiel mittels einer Feststellschraube erfolgen.

Gemäß einem bevorzugten Aspekt ist an dem Fahrradgepäckträger ein Aufnahmeelement an der Einspannvorrichtung angeordnet. Ferner sind an dem Aufnahmeelement mindestens zwei Trägerarme angeordnet, wobei jeder Trägerarm mindestens einen Aufnahmehaken umfasst.

Bevorzugt umfasst jeder der Trägerarme weiterhin einen ausklappbaren Teleskoparm mit einer innerhalb des Teleskoparmes angeordneten Feder.

Überdies vorteilhaft umfassen die an dem Aufnahmeelement angeordneten Trägerarme jeweils eine Feder und einen an der Feder angeordneten Arretierzinken. Dieser Arretierzinken arreritert durch Einrasten in das Aufnahmeelement den Trägerarm.

Gemäß einem vorteilhaften Aspekt umfasst der Fahrradgepäckträger ferner einen an der Einspannvorrichtung angeordneten Druckknopf und eine trommelförmige Spule mit einem Gurt, welcher Gurt mittels dem Druckknopf festgestellt wird.

Gemäß einem bevorzugten Aspekt ist die trommelförmige Spule über eine Spiralfeder durch eine Drehbewegung vorgespannt. Dabei umfasst die trommelförmige Spule mindestens eine Aussparung. In diese Aussparung kann ein Haltebolzen fassen, um bei Betätigung des Druckknopfs die trommelförmige Spule freizugeben.

Besonders vorteilhaft umfasst der Gurt eine Klemmschnalle mit einem Bügel. Der Bügel ist dabei derart ausgebildet, um in eine Aussparung am Aufnahmeelement eingesteckt zu werden.

Ferner bevorzugt umfasst der Fahrradgepäckträger einen rohrförmigen Anbau. Dieser rohrförmige Anbau ist an zwei Verbindungselementen angeordnet, welche Verbindungselemente jeweils mit einem Ende in eine Aussparung in jeweils einem Klemmelement eingreifen.

Gemäß einem vorteilhaften Aspekt umfasst der Fahrradgepäckträger ferner ein Stützblech. Das Stützblech umfasst zwei Aussparungen, welche Aussparungen jeweils derart ausgeformt sind, dass der Aufnahmehaken durch diese Aussparungen durchgeführt werden kann.

Im Folgenden wird die Erfindung anhand eines bevorzugten Ausführungsbeispiels in Verbindung mit Zeichnungen detailliert beschrieben. Darin zeigt:
- Fig. 1: eine schematische Darstellung einer bevorzugten Ausführung des Fahrradgepäckträger für einen Vorderbau;
- Fig. 2: eine Darstellung eines Trägerarmes;
- Fig. 3: einen Schnitt durch das obere Ende des Trägerarmes;
- Fig. 4: einen horizontalen Schnitt durch die Befestigungsvorrichtung und das Aufnahmeelement;
- Fig. 5: einen vertikalen Schnitt durch die Befestigungsvorrichtung;
- Fig. 6: eine Darstellung des Stützbleches und zwei Trägerarmen;
- Fig. 7: eine Frontalansicht des Druckknopfes und der trommelförmigen Spule;
- Fig. 8: eine Seitenansicht des Druckknopfes und der trommelförmigen Spule;
- Fig. 9: eine detaillierte Darstellung des Gurtes, welcher sich in eingesteckter Position im Aufnahmeelement befindet;

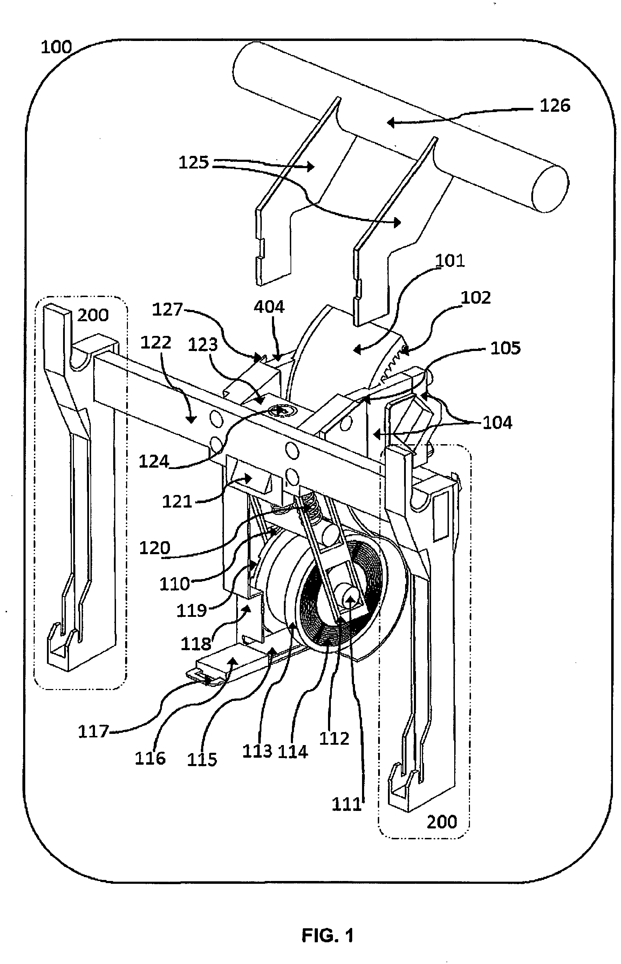

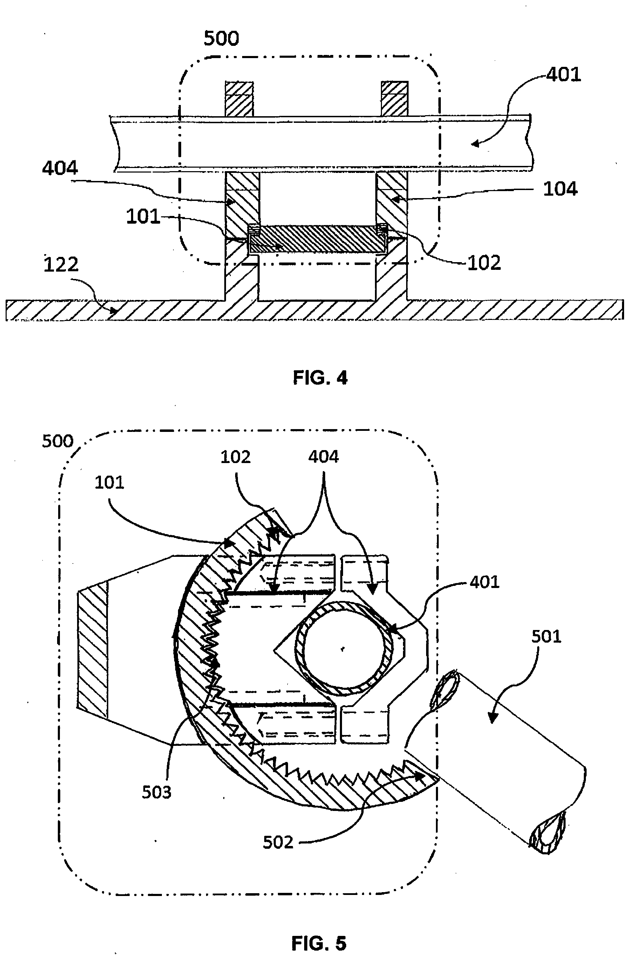

Der in **Fig. 1** beispielhaft dargestellte Fahrradgepäckträger 100 für einen Vorderbau, umfasst eine Befestigungsvorrichtung 500 (in Fig. 5 gezeigt) mit mindestens einem Klemmelement 104 bzw. 404 und ein mittels dem Klemmelement 104 bzw. 404 arretierbares Stellelement 101. Das Stellelement 101 ist dabei derart schalenförmig ausgebildet, dass es im arretierten Zustand gegen einen Lenkervorbau 501 (in Fig. 5 gezeigt) des Fahrrads, an dem der Fahrradgepäckträger montiert ist, abstützbar ist.

Das Stellelement 101 umfasst ein erstes gezahntes Profil 102 und das mindestens eine Klemmelement 104 bzw. 404 mindestens ein zweites gezahntes Profil 503 (in Fig. 5 gezeigt). Durch das Aneinanderdrücken der Klemmelemente 104 bzw. 404 an das schalenförmige Stellelement 101, beispielsweise durch eine Feststellschraube (nicht gezeigt), werden diese arretiert.

Das Aufnahmeelement 122 ist an der Einspannvorrichtung 500 (in Fig. 5 gezeigt) angeordnet, an welchem Aufnahmeelement 122 mindestens zwei Trägerarme 200 angeordnet sind.

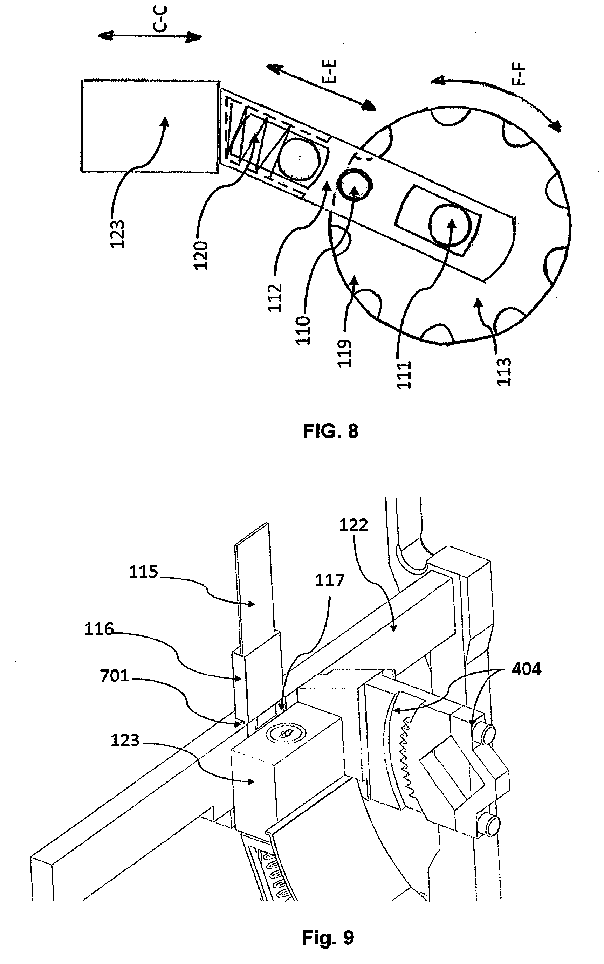

Der in Fig. 1 beispielhaft dargestellte Fahrradgepäckträger 100 für einen Vorderbau umfasst ferner einen an der Einspannvorrichtung 500 angeordneten Druckknopf 123, welcher Druckknopf ein Schloss 124 umfassen kann. Weiterhin zeigt Fig. 1 eine trommelförmige Spule 113 in einer dafür ausgeformten Kassette 118, welche in Fig. 1 aufgeschnitten dargestellt ist. Diese trommelförmige Spule 113 ist durch einen Bolzen 111 in einem Rahmengestell 112 angeordnet. Hierbei ist die trommelförmige Spule 113 über eine Spiralfeder 114 durch eine Drehbewegung (F-F) (in Fig. 8 gezeigt) vorgespannt.

An der trommelförmigen Spule 113 angeordnet ist außerdem ein Gurt 115, welcher Gurt 115 weiterhin eine Klemmschnalle 116 mit einem Bügel 117 umfasst.

Die trommelförmige Spule 113 umfasst mindestens eine Aussparung 119, in welche Aussparung 119 ein Haltebolzen 110 fassen kann, welcher Haltebolzen 110 fest mit dem Rahmengestell 112 verbunden ist.

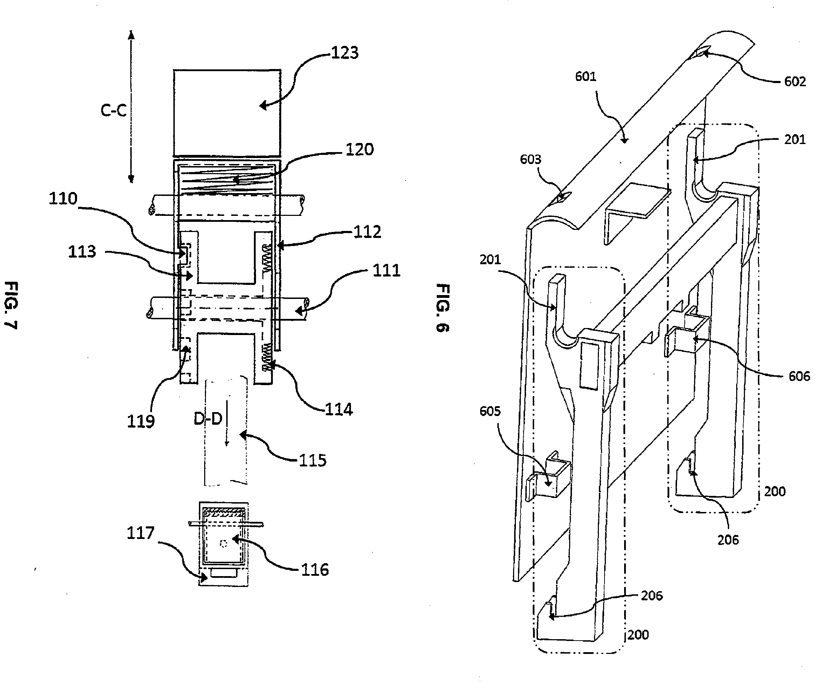

Die Betätigung des Druckknopfes 123, durch Bewegung entlang (C-C) (in Fig. 8 gezeigt), bewirkt das Spannen einer Feder 120 innerhalb des Rahmengestells 112, zwischen der trommelförmigen Spule 113 und dem Druckknopf 123 und die Bewegung des Rahmengestells 112 entlang (E-E) (in Fig. 8 gezeigt). Hierdurch wird ebenso der Haltebolzen 110 derart entlang (E-E) (in Fig. 8 gezeigt) bewegt, dass der Haltebolzen 110 nicht in die Aussparung 119 fasst.
Das somit ermöglichte Abrollen des Gurtes 115 durch Ziehen in Richtung (D-D) (in Fig. 7 gezeigt) bewirkt die Drehbewegung (F-F) (in Fig. 8 gezeigt) der trommelförmigen Spule 113 um den Bolzen 111 und das Spannen der Spiralfeder 114.

Ein Nicht-Betätigen des Druckknopfes 123 lässt den Haltebolzen 110 in die Aussparung 119 fassen und stellt die trommelförmige Spule 113 fest.

Nach einem bevorzugten Aspekt zeigt Fig. 1 den rohrförmigen Anbau 126, welcher rohrförmige Anbau 126 an zwei Verbindungselementen 125 angeordnet ist. Diese Verbindungselemente 125 greifen jeweils mit einem Ende in eine Aussparung 105 bzw. 127 in jeweils einem Klemmelement 104 bzw. 404 ein.

Am Aufnahmenelement 122 ist vorderseitig ein betätigbarer Rastvorsprung 121 zur Arretierung eines an der Rückseite entsprechend geformten Stützbleches (siehe Referenznummer 601).

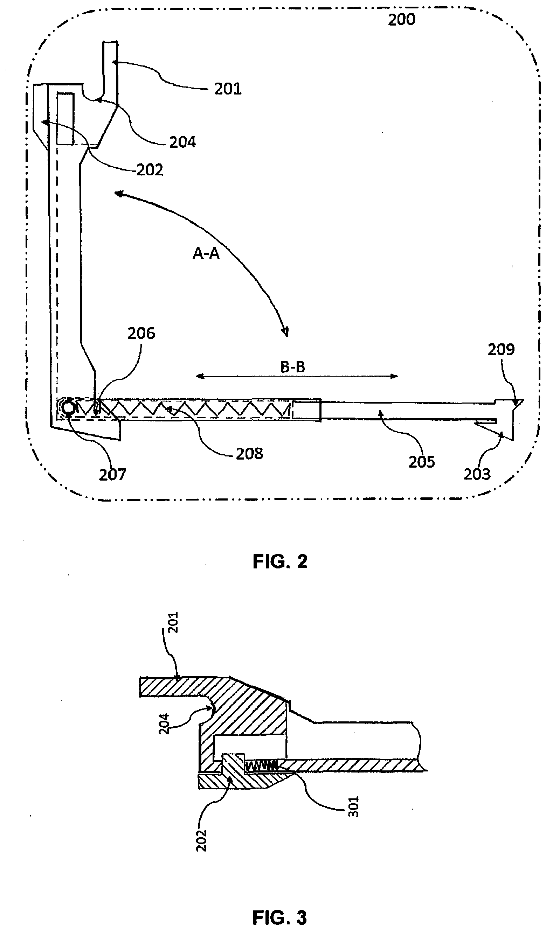

Der in **Fig. 2** beispielhaft dargestellte Trägerarm 200 umfasst mindestens einen Aufnahmehaken 201, 204 und einen ausklappbaren Teleskoparm 205 mit einer innerhalb des Teleskoparmes 205 angeordneten Feder 208. Dieser Teleskoparm ist über ein Scharnier 207 ausklappbar entlang (A-A), wobei in ausgeklapptem Zustand die Feder 208 den Teleskoparm 205 in Richtung (B-B) verlängert. In eingeklapptem Zustand greift ein Zinken 209 in eine dafür vorgesehene Spalte (nicht gezeigt) des Trägerarmes 200.

Fig. 2 zeigt gemäß einem vorteilhaften Aspekt den am Trägerarm angeordneten Arretierzinken 202, welcher Arretierzinken 202 durch Einrasten in das Aufnahmeelement 122 (in Fig. 1 gezeigt) den Trägerarm 200 arretiert.

Der in Fig. 2 beispielhaft dargestellte Trägerarm 200 umfasst ferner eine Aussparung 206.

**Fig. 3** zeigt beispielhaft einen Schnitt durch den oberen Teil des Trägerarmes 200 (in Fig. 2 gezeigt) mit mindestens einem Aufnahmehaken 201, 204 und ferner einer Feder 301 und einen an der Feder 301 angeordneten Arretierzinken 202. Dieser Arretierzinken 202 arretiert durch Einrasten in das Aufnahmeelement 122 (in Fig. 1 gezeigt) den Trägerarm 200 (in Fig. 2 gezeigt).

In **Fig. 4** ist beispielhaft ein horizontaler Schnitt durch die Befestigungsvorrichtung 500 und das an der Befestigungsvorrichtung 500 angeordnete Aufnahmeelement 122 gezeigt. Dabei umfasst die Befestigungsvorrichtung 500 mindestens ein Klemmelement 104 bzw. 404. Diese Klemmelemente 104 bzw. 404 können über eine Lenkerstange 401 gelegt werden und durch eine Klemmschraube (nicht gezeigt) fixiert werden.

Das Stellelement 101 ist derart schalenförmig ausgebildet, dass es im arretierten Zustand gegen einen Lenkervorbau 501 (in Fig. 5 gezeigt) des Fahrrads, an dem der Fahrradgepäckträger montiert ist, abstützbar ist. Das Stellelement 101 umfasst mindestens ein erstes gezahntes Profil 102 und das mindestens eine Klemmelement 104 bzw. 404 mindestens ein zweites gezahntes Profil 503 (in Fig. 5 gezeigt). Durch das Aneinanderdrücken der Klemmelemente 104 bzw. 404 an das schalenförmige Stellelement 101, beispielsweise durch eine Feststellschraube (nicht gezeigt), werden diese arretiert.

In **Fig. 5** ist beispielhaft ein vertikaler Schnitt durch die Befestigungsvorrichtung 500 gezeigt. Dabei umfasst die Befestigungsvorrichtung 500 mindestens ein Klemmelement 104 (in Fig. 1 gezeigt) bzw. 404. Diese Klemmelemente 104 (in Fig. 1 gezeigt) bzw. 404 können über eine Lenkerstange 401 gelegt werden und durch eine Klemmschraube (nicht gezeigt) fixiert werden.

Das Stellelement 101 ist derart schalenförmig ausgebildet, dass es im arretierten Zustand gegen einen Lenkervorbau 501 des Fahrrads, an dem der Fahrradgepäckträger montiert ist, abstützbar ist. Das Stellelement 101 umfasst mindestens ein erstes gezahntes Profil 102 und das mindestens eine Klemmelement 104 bzw. 404 mindestens ein zweites gezahntes Profil 503. Durch das Aneinanderdrücken der Klemmelemente 104 bzw. 404 an das schalenförmige Stellelement 101, beispielsweise durch eine Feststellschraube (nicht gezeigt), werden diese arretiert.

Indem das schalenförmige Stellelement 101 mit einer Kante 502 an der Unterseite des Vorbaus 501 im eingebauten Zustand abgestützt ist, wird ein Verrutschen aus einer eingestellten Position aufgrund von beim Transport von schweren Gegenständen auftretenden, entsprechenden Kräften verhindert oder zumindest reduziert.

In **Fig. 6** zeigt eine beispielhafte Darstellung des Stützbleches 601 und zwei Trägerarmen 200. Das Stützblech 601 umfasst dabei zwei Aussparungen 602 und 603, welche Aussparungen 602 und 603 jeweils derart ausgeformt sind, dass der Aufnahmehaken 201 durch diese Aussparungen 602 bzw. 603 durchgeführt werden kann.

Das Stützblech 601 umfasst weiterhin zwei Halteelemente 605 und 606, welche jeweils in eine Aussparung 206 des Trägerarmes 200 fassen können.

**Fig. 7** zeigt eine beispielhafte Frontalansicht des an der Einspannvorrichtung 500 (in Fig. 1 gezeigt) angeordneten Druckknopfes 123 und der trommelförmigen Spule 113. Die trommelförmige Spule 113 ist über eine Spiralfeder 114 durch eine Drehbewegung (F-F) (in Fig. 8 gezeigt) vorgespannt. Dabei umfasst die trommelförmige Spule 113 mindestens eine Aussparung 119, in welche Aussparung 119 ein Haltebolzen 110 fassen kann, welcher Haltebolzen 110 fest mit dem Rahmengestell 112 verbunden ist, um bei Betätigung des Druckknopfs 123 die trommelförmige Spule 113 festzustellen.

Die trommelförmige Spule 113 ist durch einen Bolzen 111 in einem Rahmengestell 112 angeordnet. An der trommelförmige Spule 113 angeordnet ist außerdem ein Gurt 115, welcher Gurt 115 weiterhin eine Klemmschnalle 116 mit einem Bügel 117 umfasst.

Die Betätigung des Druckknopfes 123, durch Bewegung entlang (C-C), bewirkt das Spannen einer Feder 120 innerhalb des Rahmengestells 112, zwischen der trommelförmigen Spule 113 und dem Druckknopf 123 und die Bewegung des Rahmengestells 112 entlang (E-E) (in Fig. 8 gezeigt). Hierdurch wird ebenso der Haltebolzen 110 derart entlang (E-E) (in Fig. 8 gezeigt) bewegt, dass der Haltebolzen 110 nicht in die Aussparung 119 fasst.

Das somit ermöglichte Abrollen des Gurtes 115 durch Ziehen in Richtung (D-D) bewirkt die Drehbewegung (F-F) (in Fig. 8 gezeigt) der trommelförmigen Spule 113 um den Bolzen 111 und das Spannen der Spiralfeder 114.

Ein Nicht-Betätigen des Druckknopfes 123 lässt den Haltebolzen 110 in die Aussparung 119 fassen und stellt die trommelförmige Spule 113 fest.

**Fig. 8** zeigt eine beispielhafte Seitenansicht des an der Einspannvorrichtung 500 (in Fig. 1 gezeigt) angeordneten Druckknopfes 123 und der trommelförmigen Spule 113. Die trommelförmige Spule 113 ist über eine Spiralfeder 114 (in Fig. 7 gezeigt) durch eine Drehbewegung (F-F) vorgespannt. Dabei umfasst die trommelförmige Spule 113 mindestens eine Aussparung 119, in welche Aussparung 119 ein Haltebolzen 110 fassen kann, welcher Haltebolzen 110 fest mit dem Rahmengestell 112 verbunden ist, um bei Betätigung des Druckknopfs 123 die trommelförmige Spule 113 festzustellen.

Die Betätigung des Druckknopfes 123, durch Bewegung entlang (C-C), bewirkt das Spannen einer Feder 120 innerhalb des Rahmengestells 112, zwischen der trommelförmigen Spule 113 und dem Druckknopf 123 und die Bewegung des Rahmengestells 112 entlang (E-E). Hierdurch wird ebenso der Haltebolzen 110 derart entlang (E-E) bewegt, dass der Haltebolzen 110 nicht in die Aussparung 119 fasst.

Ein Nicht-Betätigen des Druckknopfes 123 lässt den Haltebolzen 110 in die Aussparung 119 fassen und stellt die trommelförmige Spule 113 fest.

In **Fig. 9** ist eine beispielhafte Darstellung des Klemmelementes 404, sowie des Gurtes 115 gezeigt. Der Gurt 115 umfasst eine Klemmschnalle 116 mit einem Bügel 117. Der Bügel 117 ist dabei derart ausgebildet, um in eine Aussparung 701 am Aufnahmeelement 122 eingesteckt zu werden.

Fig. 9 zeigt den Gurt 115 in eingesteckter Position im Aufnahmeelement 122. Die Aussparung 701 im Aufnahmeelement 122 ist derart geformt, dass der an der Klemmschnalle 116 angeordnete Bügel 117 in die Aussparung 701 fassen kann. Durch das Betätigen des Druckknopfes 123 wird die Aussparung 701 freigelegt und die Klemmschnalle 116 kann aus der in das Aufnahmeelement 122 eingesteckten Position gelöst werden.

Bei Nicht-Betätigen des Druckknopfes 123 verhindert der Druckknopf 123 das lösen der Klemmschnalle 116 aus der eingesteckten Position im Aufnahmeelement 122. So kann durch den an der Klemmschnalle angeordneten Gurt 115 beispielsweise eine Last fixiert werden.

## Patentansprüche

1. Fahrradgepäckträger (100) für einen Vorderbau, welcher Fahrradgepäckträger (100) eine Befestigungsvorrichtung (500) mit mindestens einem Klemmelement (104, 404) und ein mittels dem Klemmelement (104, 404) arretierbares Stellelement (101) umfasst, wobei das Stellelement (101) derart schalenförmig ausgebildet ist, dass es im arretierten Zustand gegen einen Lenkervorbau (501) des Fahrrads, an dem der Fahrradgepäckträger montiert ist, abstützbar ist.

2. Fahrradgepäckträger (100) gemäß Anspruch 1, wobei das Stellelement (101) mindestens ein erstes gezahntes Profil (102) umfasst und wobei das mindestens eine Klemmelement (104, 404) mindestens ein zweites gezahntes Profil (503) umfasst, so dass durch Aneinanderdrücken der Klemmelemente (104, 404) an das schalenförmige Stellelement (101) diese arretiert werden.

3. Fahrradgepäckträger (100) nach Anspruch 1 oder 2, wobei an dem Fahrradgepäckträger (100) ein Aufnahmeelement (122) an der Einspannvorrichtung (500) angeordnet ist, an welchem Aufnahmeelement (122) mindestens zwei Trägerarme (200) angeordnet sind, wobei jeder Trägerarm (200) mindestens einen Aufnahmehaken (201, 204) umfasst.

4. Fahrradgepäckträger (100) nach Anspruch 3, wobei jeder der Trägerarme (200) einen ausklappbaren Teleskoparm (205) mit einer innerhalb des Teleskoparmes (205) angeordnete Feder (208) umfasst.

5. Fahrradgepäckträger (100) nach Anspruch 3 oder 4, wobei die an dem Aufnahmeelement (122) angeordneten Trägerarme (200) jeweils eine Feder (301) und einen an der Feder (301) angeordneten Arretierzinken (202) umfasst, welcher Arretierzinken (202) durch Einrasten in das Aufnahmeelement (122) den Trägerarm (200) arretiert.

6. Fahrradgepäckträger (100) nach einem der vorangehenden Ansprüche, wobei der Fahrradgepäckträger (100) ferner einen an der Einspannvorrichtung (500) angeordneten Druckknopf (123) umfasst, und wobei der Fahrradgepäckträger (100) eine trommelförmige Spule (113) mit einem Gurt (115) umfasst, welcher Gurt (115) mittels dem Druckknopf (123) festgestellt wird.

7. Fahrradgepäckträger (100) nach Anspruch 6, wobei die trommelförmige Spule (113) über eine Spiralfeder (114) durch eine Drehbewegung (F-F) vorgespannt ist, wobei die trommelförmige Spule (113) mindestens eine Aussparung (119) umfasst, in welche Aussparung (119) ein Haltebolzen (110) fassen kann, um bei Betätigung des Druckknopfs (123) die trommelförmige Spule (113) freizugeben.

8. Fahrradgepäckträger (100) nach Anspruch 6 oder 7, wobei der Gurt (115) eine Klemmschnalle (116) mit einem Bügel (117) umfasst, und wobei der Bügel (117) derart ausgebildet ist, um in eine Aussparung (701) am Aufnahmeelement (122) eingesteckt zu werden.

9. Fahrradgepäckträger (100) nach einem der vorangehenden Ansprüche, wobei der Fahrradgepäckträger (100) ferner einen rohrförmigen Anbau (126) umfasst, welcher rohrförmige Anbau (126) an zwei Verbindungselementen (125) angeordnet ist, welche Verbindungselemente (125) jeweils mit einem Ende in eine Aussparung (105)(127) in jeweils einem Klemmelement (104) bzw. (404) eingreifen.

10. Fahrradgepäckträger (100) nach einem der vorangehenden Ansprüche, wobei der Fahrradgepäckträger (100) ein Stützblech (601) umfasst, welches Stützblech (601) zwei Aussparungen (602, 603) umfasst, welche Aussparungen (602, 603) jeweils derart ausgeformt sind, dass der Aufnahmehaken (201) durch diese Aussparungen (602, 603) durchgeführt werden kann.
